# EUROPÄISCHE PATENTANMELDUNG

(11) **EP 1 158 155 A2**
(43) Veröffentlichungstag der Anmeldung: **28.11.2001**
(21) Anmeldenummer: 01111603.5
(22) Anmeldetag: 12.05.2001
(51) Int. Cl.: F02F 7/00, F01B 1/12

(54) **Modular aufgebaute Brennkraftmaschine**

(30) Priorität: 24.05.2000 DE 10025813
(71) Anmelder: DEUTZ Aktiengesellschaft, 51063 Köln (DE)
(72) Erfinder: Pleimling, Helmut, 51491 Overath (DE); Glöckner, Manfred, Dr., 50259 Pulheim (DE); Lingens, Andreas, Dr., 50674 Köln (DE)

(57) **Zusammenfassung**

2.1 Die Erfindung betrifft eine Brennkraftmaschine mit einem Kurbelgehäuse mit Kurbelwelle, Pleuel, Kolben, Zylinder und Zylinderkopf, wobei zum Betrieb der Brennkraftmaschine notwendige Systeme wie Kühlsystem mit einer Kühlmittelpumpe, Kraftstoffsystem mit einer Kraftstoffpumpe, Schmiersystem mit einer Schmiermittelpumpe und elektrisches System mit einem Generator vorhanden sind.
2.2 Erfindungsgemäß sind das Kühlsystem mit einer Kühlmittelpumpe, das Kraftstoffsystem mit einer Kraftstoffpumpe, das Schmiersystem mit einer Schmiermittelpumpe und das elektrische System mit einem Generator modular aufgebaute Komponenten und jedes der Systeme ist unabhängig von der Drehzahl der Kurbelwelle angetrieben.

## Beschreibung

Die Erfindung betrifft eine Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Arbeitsraums bewegbar ist, und wobei zum Betrieb der Brennkraftmaschine notwendige Systeme wie Kühlsystem mit einer Kühlmittelpumpe, Kraftstoffsystem mit einer Kraftstoffpumpe, Schmiersystem mit einer Schmiermittelpumpe und elektrisches System mit einem Generator vorhanden sind sowie ein Verfahren zum Betreiben einer solchen Brennkraftmaschine.

Derartige Brennkraftmaschinen sind allgemein bekannt und werden in verschiedenen Ausführungen als Dieselmotoren, Ottomotoren oder Gasmotoren gebauten. Gemeinsames Merkmal aller dieser Motoren ist es, dass die zum Betrieb der Brennkraftmaschine notwendigen Systeme (Kühlsystem mit der Kühlmittelpumpe, Kraftstoffsystem mit der Kraftstoffpumpe, Schmiersystem mit der Schmiermittelpumpe und elektrisches System mit dem Generator) von der Kurbelwelle der Brennkraftmaschine über ein mechanisches Getriebe, beispielsweise in Form von Zahnrädern, Ketten oder Riemen angetrieben werden. Somit ist die Drehzahl der entsprechenden Pumpen bzw. des Generators synchron zu der Drehzahl der Kurbelwelle.

Der Erfindung liegt die Aufgabe zugrunde, eine Brennkraftmaschine bereitzustellen, die unter optimalen Betriebsbedingungen betrieben werden kann.

Diese Aufgabe wird dadurch gelöst, dass das Kühlsystem mit einer Kühlmittelpumpe, das Kraftstoffsystem mit einer Kraftstoffpumpe und das Schmiersystem mit einer Schmiermittelpumpe modular aufgebaute Komponenten sind und jedes der Systeme unabhängig von der Drehzahl der Kurbelwelle angetrieben ist. Dadurch können alle diese Systeme in Abhängigkeit des entsprechenden momentanen Bedarfs angetrieben werden, was höchste technische Wirksamkeit ermöglicht und das wirtschaftliche Optimum darstellt. Dabei sind auch Anforderungen zur Umweltverträglichkeit optimal erfüllbar. Der Gegenstand der Erfindung ist grundsätzlich auf alle Bauarten von Brennkraftmaschinen wie selbstzündende Brennkraftmaschinen (Dieselmotoren mit beispielsweise konventioneller Einspritzung, Pumpe-Leitung-Düse-Systemen oder Common-Rail-Systemen) und fremdgezündete Brennkraftmaschinen (Ottomotoren) ebenso wie auf alle Arten von Gasmotoren anwendbar. Dabei ist dann insbesondere das Kraftstoffsystem mit der Kraftstoffpumpe entsprechend den Anforderungen der speziellen Brennkraftmaschine ausgebildet bzw. angepasst und wobei die Kraftstoffpumpe bei einem Gasmotor zumindest einen Teil des Gasversorgungssystems darstellt. Der Generator kann so ausgebildet sein, dass er gleichzeitig die Funktion des Starters übernimmt. In diesem Fall ist die Einheit Generator-Starter vorteilhaft fest mit der Kurbelwelle verbunden und dementsprechend mit Kurbelwellendrehzahl angetrieben. Insbesondere, wenn der Generator getrennt von dem Starter angebaut wird, kann der Generator mit einem variablen oder festen Übersetzungsverhältnis von der Kurbelwelle angetrieben werden. Im Falle des Antriebs mit variablem Übersetzungsverhältnis kann ggf. eine Steuerung bzw. Regelung in Abhängigkeit der benötigen Leistung erfolgen.

Das gesamte elektrische System kann auf die 42 Volt-Technik eingestellt sein, wobei hier aber auch beliebige andere Spannungen möglich sind.

Das entsprechende Verfahren zum Betreiben einer solchen Brennkraftmaschine zeichnet sich dadurch aus, dass jedes der Systeme unabhängig von der Kurbelwellendrehzahl angetrieben von einer Steuerelektronik in Abhängigkeit des momentanen Bedarfs unter Berücksichtigung technischer und/oder wirtschaftlicher und/oder umweltberücksichtigender Randbedingungen steuer- und regelbar ist.

In Weiterbildung der Erfindung sind weitere Systeme aus der Gruppe Luftpresser, Klimakompressor, Ladeluftdruckerhöhungseinrichtung bedarfsweise vorhanden. Ein Luftpresser ist insbesondere bei Nutzfahrzeugmotoren und auch Baumaschinenmotoren vorhanden, während ein Klimakompressor bei allen Arten von Fahrzeugmotoren vorhanden sein kann. Eine Ladeluftdruckerhöhungseinrichtung kann beispielsweise ein elektrisch angetriebener Verdichter oder aber auch ein bekannter Abgasturbolader mit zusätzlichem beispielsweise elektrischem Antrieb sein.

In Weiterbildung der Erfindung ist jedes der Systeme unabhängig voneinander elektrisch, pneumatisch, hydraulisch, mechanisch oder in einer Kombination davon angetrieben. Hier ist insbesondere der elektrische Antrieb bevorzugt, wobei aber auch, wie zuvor bei dem Abgasturbolader mit elektrischem Antrieb, eine Variante mit dualem Antrieb zur Anwendung kommen kann. Dabei können dann beide Antriebe unabhängig von der Kurbelwellendrehzahl steuerbar und regelbar sein. Es reicht aber im Rahmen der Erfindung schon aus, wenn ein Antrieb regelbar ist, wobei dieser dann beherrschend für die Drehzahl des Gesamtantriebs des jeweiligen Systems sein muss.

In Weiterbildung der Erfindung weist die Brennkraftmaschine einen elektrisch, pneumatisch oder hydraulisch betätigten Ventiltrieb auf. Hier sind mit Ventiltrieb sowohl ein beispielsweise direkt elektrisch betätigtes Ventil als auch bei Mehrventilbrennkraftmaschinen kombiniert angetriebene Ventile gemeint. In diesbezüglicher weiterer Ausgestaltung ist die Brennkraftmaschine nockenwellenlos aufgebaut. Somit verbleiben vom klassischen Motorenbau nur der nackte Rumpfmotor mit Kurbelgehäuse, Kurbelwelle, Pleuel, Kolben, Zylindern und Zylinderköpfen.

In weiterer Ausgestaltung der Erfindung ist eine Steuer- und Regelelektronik für die bedarfsmäßige Ansteuerung und Regelung der Systeme vorhanden. Dabei sind sowohl an den einzelnen Systemen als auch an der eigentlichen Brennkraftmaschine Sensoren zur Aufnahme der jeweils benötigten Betriebs- Last und Bedarfszustände vorhanden.

## Patentansprüche

1. Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Arbeitsraums bewegbar ist, und wobei zum Betrieb der Brennkraftmaschine notwendige Systeme wie Kühlsystem mit einer Kühlmittelpumpe, Kraftstoffsystem mit einer Kraftstoffpumpe, Schmiersystem mit einer Schmiermittelpumpe und elektrisches System mit einem Generator vorhanden sind,
**dadurch gekennzeichnet, dass** das Kühlsystem mit einer Kühlmittelpumpe, das Kraftstoffsystem mit einer Kraftstoffpumpe und das Schmiersystem mit einer Schmiermittelpumpe modular aufgebaute Komponenten sind und dass jedes der Systeme unabhängig von der Drehzahl der Kurbelwelle angetrieben ist.

2. Brennkraftmaschine nach Anspruch 1,
**dadurch gekennzeichnet, dass** weitere Systeme aus der Gruppe Luftpresser, Klimakompressor, Ladeluftdruckerhöhungseinrichtung bedarfsweise vorhanden sind.

3. Brennkraftmaschine nach einem der vorherigen Ansprüche,
**dadurch gekennzeichnet, dass** jedes der Systeme unabhängig elektrisch, pneumatisch, hydraulisch, mechanisch oder einer Kombination davon angetrieben ist.

4. Brennkraftmaschine nach einem der vorherigen Ansprüche,
**dadurch gekennzeichnet, dass** die Brennkraftmaschine einen elektrisch, pneumatisch oder hydraulisch betätigten Ventiltrieb aufweist.

5. Brennkraftmaschine nach Anspruch 4,
**dadurch gekennzeichnet, dass** die Brennkraftmaschine nockenwellenlos ausgebildet ist.

6. Brennkraftmaschine nach einem der vorherigen Ansprüche,
**dadurch gekennzeichnet, dass** eine Steuer- und Regelelektronik für die bedarfsmäßige Ansteuerung der Systeme vorhanden ist.

7. Verfahren zum Betreiben einer Brennkraftmaschine mit einem Kurbelgehäuse, in dem eine Kurbelwelle drehbar gelagert ist, an der zumindest ein einen Kolben tragendes Pleuel angelenkt ist, wobei der Kolben in einem von einem Zylinderkopf abgedeckten Zylinder unter Bildung eines Arbeitsraum bewegbar ist, und wobei zum Betrieb der Brennkraftmaschine notwendige Systeme wie Kühlsystem mit einer Kühlmittelpumpe, Kraftstoffsystem mit einer Kraftstoffpumpe, Schmiersystem mit einer Schmiermittelpumpe und elektrisches System mit einem Generator/Starter vorhanden sind,
**dadurch gekennzeichnet, dass** der Antrieb des Kühlsystems mit einer Kühlmittelpumpe, des Kraftstoffsystems mit einer Kraftstoffpumpe und des Schmiersystems mit einer Schmiermittelpumpe unabhängig von der Kurbelwellendrehzahl von einer Steuerelektronik in Abhängigkeit des momentanen Bedarfs unter Berücksichtigung technischer und/ oder wirtschaftlicher und/oder umweltberücksichtigender Randbedingungen steuer- und regelbar ist.
